# EUROPEAN PATENT SPECIFICATION

(11) **EP 4 477 539 B1**
(45) Date of publication and mention of the grant of the patent: **29.04.2026**
(21) Application number: 24181198.3
(22) Date of filing: 10.06.2024
(51) Int. Cl.: B64D 1/22, B64D 1/00, H01R 13/62

(54) **RESTRAIN AND RELEASE MECHANISM FOR AN EXTERNALLY AIRBORNE LOAD WITH "SINGLE LUG" INTERFACE**
RÜCKHALTE- UND FREIGABEMECHANISMUS FÜR EINE EXTERN LUFTGETRAGENE LAST MIT EINER EINZELLASCHEN-SCHNITTSTELLE
MÉCANISME DE RETENUE ET DE LIBÉRATION POUR UNE CHARGE AÉROPORTÉE DE L'EXTÉRIEUR AVEC UNE INTERFACE À À OREILLE UNIQUE

(30) Priority: 15.06.2023 IT 202300012354
(43) Date of publication of application: 18.12.2024
(73) Proprietor: AEREA S.p.A., 22078 Turate (CO) (IT)
(72) Inventor: PERNECHELE, Luca Andrea, 20099 Sesto San Giovanni (MI) (IT); PEZZONI, Danilo, 22063 Cantù (CO) (IT)
(74) Representative: Buzzi, Notaro & Antonielli d'Oulx S.p.A.

(56) References cited:
- EP-B1- 1 463 895
- FR-A1- 2 439 131
- US-B1- 7 648 104

## Description

### Field of the invention

The present invention relates to a restrain and release mechanism for an externally airborne load, so-called "Release Unit", designed to be constrained by mechanically fitting to a generic aircraft. Such mechanism is adapted to hook, keep suspended during transport and release load containers, so-called "Store", upon command. The object of the Stores is, by way of non-limiting example, to house various equipment so as to extend the operative capacity of an aircraft.

### State of the prior art

Patent applications, EP0955236 A1, US4148451 A1 and GB2071286 A disclose restrain and release mechanisms for externally airborne loads comprising one or more hooks designed to be coupled with loads provided with special suspension rings. Such hooks are rotatable around respective pivots between an opening position and a retention position of the suspension ring of the respective load to be constrained. Furthermore, the prior art restrain and release mechanisms may be provided with support abutments for stabilising the load during transport.

Such restrain mechanism generally provide for displacing the hooks of the kinematics that are very simple, which alone allow to obtain the required geometric alignment precision for different loads, which may vary from each other both in the shape and in the volume, during the coupling, that is when the load is approached to the support abutments.

In particular, the hooking step may be carried out easily only if there is appropriate clearance between the hook and the ring of the load to be hooked, so as to allow the insertion thereof with a mutual friction-less movement. Such minimum clearance should be guaranteed both considering the sum of the geometric tolerances of the various components, in their most disadvantageous combination, and due to the different position that is obtained in the contact between the support abutments and the various types of loads, which allows the ring to be positioned at a significantly different height with respect to the load.

In the closing condition of the hook of such restrain mechanisms, it is therefore essential to be able to entirely eliminate the clearance mentioned above using a simple and reliable device. Furthermore the most efficient transfer possible of the flow of stresses to the aircraft should be provided for so as to minimise the resistant sections therefore reducing the production costs and the overall weight of the device and of the reinforcements required for the installation thereof on an aircraft. Furthermore, such restraint and release mechanisms must be provided with mechanisms for the kinematic displacement of the hook that can ensure the closing and opening thereof upon command for any possible operating condition of the aircraft.

The patent application WO2016087822 A1 discloses a restrain and release mechanism for airborne loads comprising a rotatable hook and four support arms each provided with means for displacing between a retracted position, for hooking the load, and an extended position in which they press against the load. Such solution is cumbersome, expensive to obtain, and it requires supplementary maintenance of the mechanisms for displacing the arms. Furthermore, it does not allow a quick coupling of the load with the restraint mechanism given that it provides for that an operator has to adjust the extension of the four support arms each time the load is coupled.

Patent US7648104 B1 also relates to a load restraint and release mechanism which comprises a suspension hook that can only be rotated by means of a rotation mechanism. To stabilise the load during transport, such mechanism comprises a pair of movable arms which must be lowered to bring them into contact with the load, adjusting them manually after the load has been hooked.

### Summary of the invention

With the aim of attaining such object, the invention relates to a restrain and release mechanism for an externally airborne load of claim 1, whose primary characteristic lies in the fact that it comprises vertical shift means adapted to lift, that is to vertically shift, the hook from a lowered position that only restrains the load to a raised restraint and blocking position in which the load is secured against the pair of support arms. That is, the vertical shift means are configured to vertically shift the hook from the lowered load-restraining position to a raised load-blocking position in which the load is pressed against the pair of support arms.

In this manner, the lowered position of the hook creates, during the coupling of the load, the necessary clearance between the hook and the ring, which allows a quick and easy coupling thereof. Subsequently, actuation of the vertical shift means for the hook allows to secure the load against the support arms stabilising it during transport.

In an embodiment of the invention, the restraint and release mechanism comprises a system for constraining the hook in the load-blocking position, such restraint system comprises an actuator provided with a push rod, a return spring, an extendable component, a constraint hook connected to the hook, constraint means connected to the box-shaped body, the constraint means being rotatable through the action of the push rod actuated by the extendable component between a rest position and a restraint position with the constraint hook. In an embodiment of the invention the push rod can be actuated longitudinally to rotate the constraint means in the constraint position through the thrust obtained by the controlled heating of a device obtained with a shape memory material which extends when heated. The device made of shape memory material is heated by means of two adhesive flexible strips which comprise respective electrically heated resistors.

In an embodiment of the invention, the vertical shift means of the hook comprise a lifting system of the so-called screw and wedge type which includes a wedge which can move vertically in a saddle by mutually approaching or spacing apart a pair of blocks displaced by a double-threaded screw, such blocks having respective inclined sliding surfaces in contact with corresponding faces of the wedge.

In an embodiment of the invention, the system for lifting the hook comprises a mechanical stop secured in an axial seat of the screw, the stop being movable between a rest position and a position for blocking the rotation of the screw by engaging at least one ball integral with the stop with a plurality of grooves provided for in the seat of the screw.

In an embodiment of the invention, the each of the support arms comprise a shell made of a metal alloy with a pair of protruding arms made of carbon fibre coupled thereto.

In an embodiment of the invention, the support arms comprise respective support surfaces shaped according to the shape of the load.

In an embodiment of the invention, the lateral walls of the opening are shaped to be in contact with the lateral surfaces of the suspension ring in the load-blocking position.

### Brief description of the drawings

The invention will now be described in detail with reference to the attached drawings, provided purely by way of non-limiting example, wherein:
- figure 1 is a schematic perspective view of an embodiment of the restrain and release mechanism according to the invention, and of an example of a load to be hooked to the mechanism according to the invention,
- figure 2 is a bottom perspective view and in larger scale of figure 1,
- figures 3 and 4 are plan schematic views which exemplify the operation of the restrain mechanism according to the invention,
- figures 5-7 are partially cross-sectional perspective views which exemplify the operation of the restraint mechanism according to the invention,
- figures 8-24 are views in larger scale of some components of the restrain and release mechanism according to the invention,
- figures 25 and 26 are longitudinal cross-sectional views and in larger scale of a detail of the restrain and release mechanism according to the invention,
- figures 27 and 28 are views in larger scale of a pair of components of the restrain and release mechanism according to the invention, and
- figure 29 is a partial schematic bottom perspective view of an embodiment of the restrain and release mechanism according to the invention.

### Detailed description of the invention

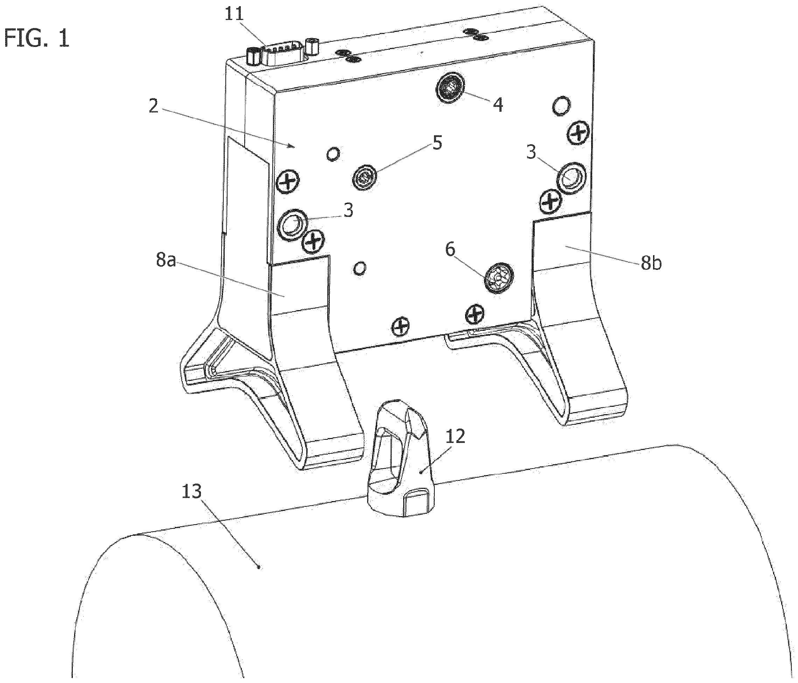

Initially with reference to figure 1, a restrain and release mechanism according to the invention and an externally airborne load typically but not exclusively cylindrical 13, hereinafter referred to as Store 13, provided with a suspension ring 12 are shown.

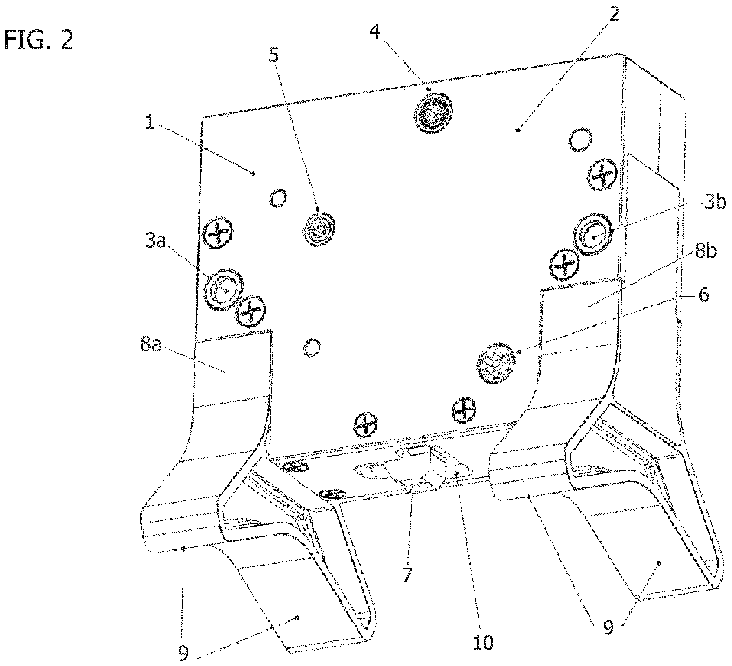

The Store 13 is not an object of the present invention and it is shown with the sole purpose of showing its mechanical and functional constrains with the restrain mechanism. It generally comprises a cylindrical container 13 provided with a suspension ring 12 adapted to be coupled with the hook 7, shown in figure 2, as will be described hereinafter. It is clear that the Store 13 may take various configurations and shapes depending on the specific uses.

The restrain mechanism according to the invention comprises a box-shaped body 2, which includes two half-shells made of light metal alloys, designed to contain and support the hooking mechanisms to be addressed hereinafter. The interface points 3 allow the mechanical fitting of the entire restrain mechanism on a generic aircraft, suitably provided in the concerned areas. One of the potential systems, shown by way of non-limiting example, may consist of two or more bushings 3 into which metal through pins which, once duly tightened, generally stiffly secure the restrain mechanism to the aircraft, are inserted.

A set of operating points 4,5,6 is made accessible to the external of the box-shaped body 2 so as to allow an operator to move the internal mechanism by introducing appropriate operating keys so as to engage, tighten and release the Store 13 on the aircraft. These operating points 4,5,6 may advantageously externally bear notches or other similar indications which, as a function of their position, allow the operator to be able to deduce the mechanical condition of the kinematic mechanisms of the restrain mechanism through a simple visual inspection.

During the motion of the aircraft within its flight envelope, the mass of the Store 13 generates inertial and aerodynamic forces which should be appropriately counteracted by stiffly and safely constraining the Store 13 to the restrain mechanism and, therefore to the aircraft, so as to prevent any unwanted movement or vibration. This is obtained by provide for a pair of support arms 8 which can transfer the forces described above from the Store 13 to the aircraft. To do this, the lower part of the arms 8 provides for appropriately shaped contact surfaces 9, shown in figure 2, provided to come into contact with the Store 13 as will be described below. The high stresses involved and the robustness and stiffness characteristics required of the support arms 8 prefer the use of metallic materials such as light alloys or steel, or high resistance fibres such as carbon or the like.

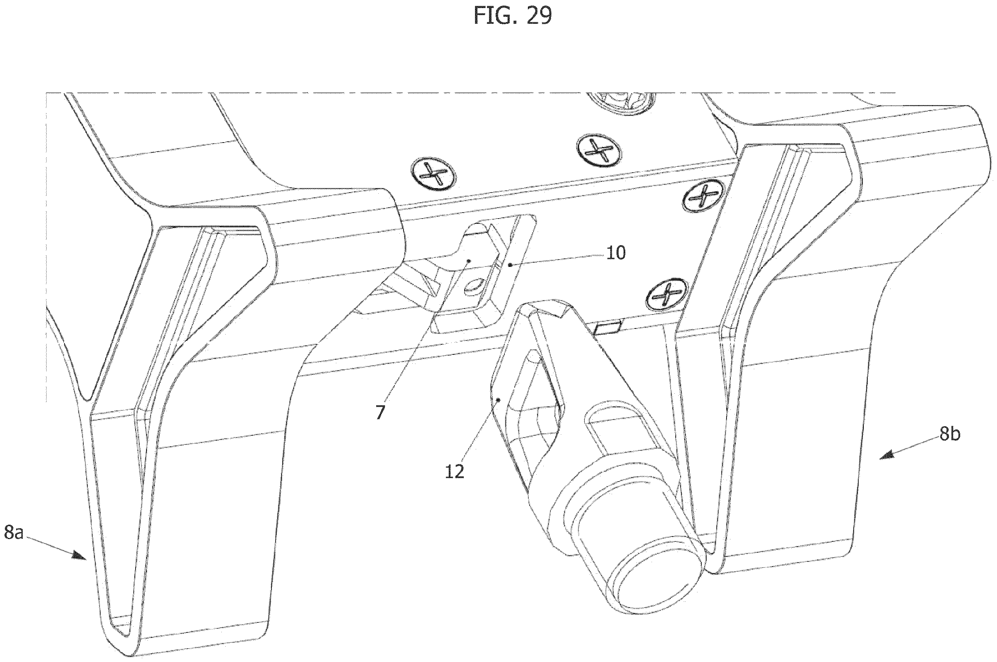

The geometry of the surfaces 9, along with the shape of the Store 13, is generally insufficient to react to all components of the underlying inertial and aerodynamic forces. In particular, the forces whose orientation lies in the plane of the lower face of the box-shaped body 2 cannot be effectively reacted by solely resting against the surfaces 9, but there arises the need for a further reaction point. In one of the potential embodiments, shown in figure 29, the walls of the opening 10 offer a support to the lateral surfaces of the suspension ring 12, so as to be able to absorb such components.

With reference to figure 2, the Store 13 is adapted to be suspended on the restrain mechanism by means of a hook 7 regarding which there should be provided for a suitable kinematic mechanism which, displacing it, can allow the coupling and release of the Store 13 upon command whenever desired.

In particular, the hooking step may be carried out easily only if there is appropriate clearance between the hook 7 and the ring 12, so as to allow the insertion thereof with a mutual unhindered movement. Such minimum clearance should be guaranteed, both considering the sum of the geometric tolerances of the various components, in their most disadvantageous combination, and due to the different position that is obtained in the contact between the surfaces 9 and the various types of Stores 13, each with its own diameter, which allows the ring 12 to be positioned at significantly different heights. Upon closing the hook, it is essential to be able entirely eliminate such clearance by means of a specific tightening mechanism, which brings the restrain mechanism in contact with Store 13 and firmly forcing it against the surfaces 9 described above.

Due to the amount of forces involved, the contact generally reaches tens of thousands of N, the tightening mechanism must provide for a force multiplication system which is introduced manually by the operator, by adopting the screw or wedge principle. In such cases, the friction generated in the kinematic mechanism is generally insufficient to maintain the tightening, which tends to loosen due to the high vibrations to which the restrain mechanism is subjected during its normal service life. Therefore, an additional stop mechanism is provided for to prevent the loosening. The action of the operator will automatically release such mechanism during the tightening operations, and then insert it again upon the conclusion thereof.

The restrain mechanism according to the invention may be provided with electromechanical systems which allow the remote activation of some actuation commands, same case applying to enabling to read the position and therefore the status of the internal kinematic mechanism through appropriate electrical contacts. These signals can be carried through special connections which, despite coming in multiple forms, can be exemplified with a connector 11.

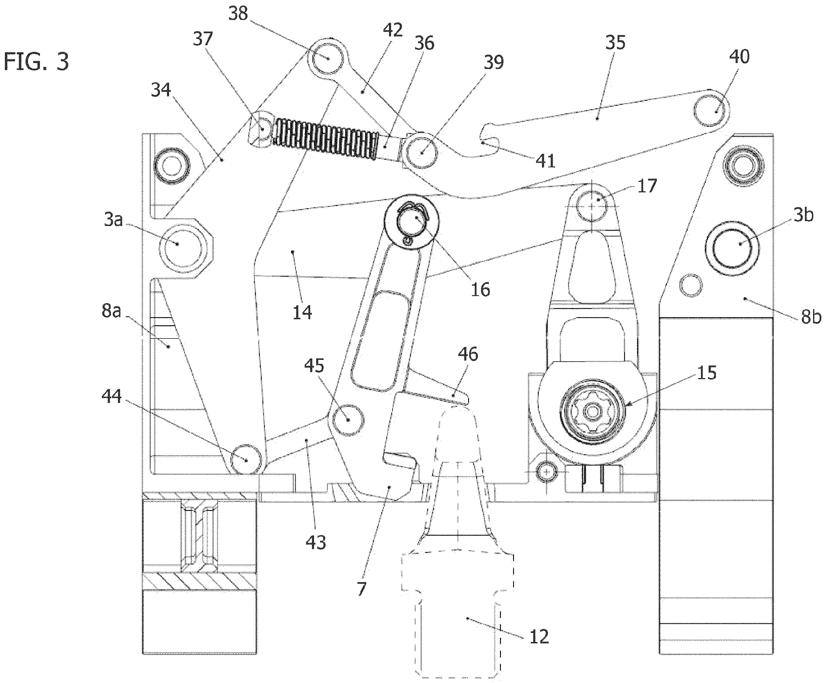

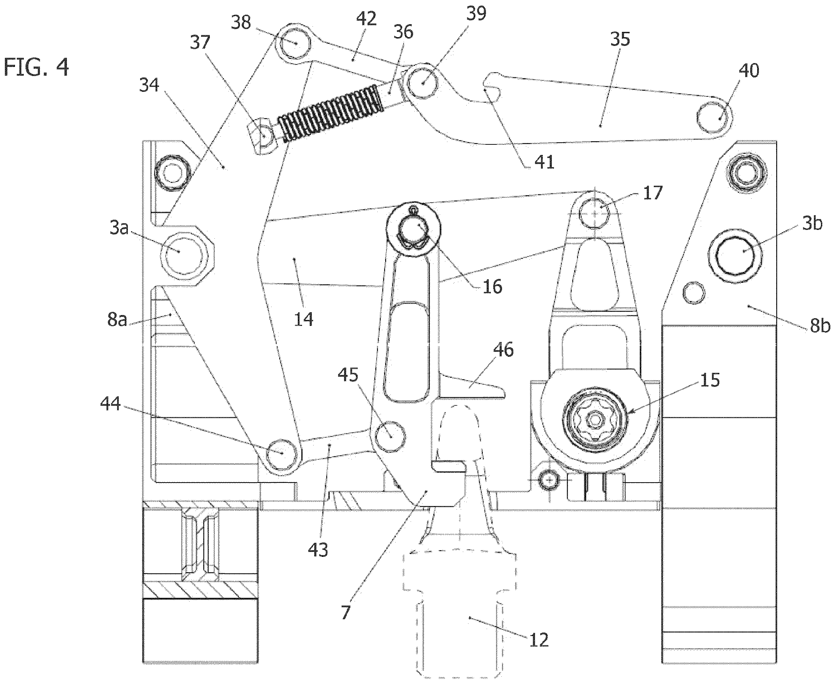

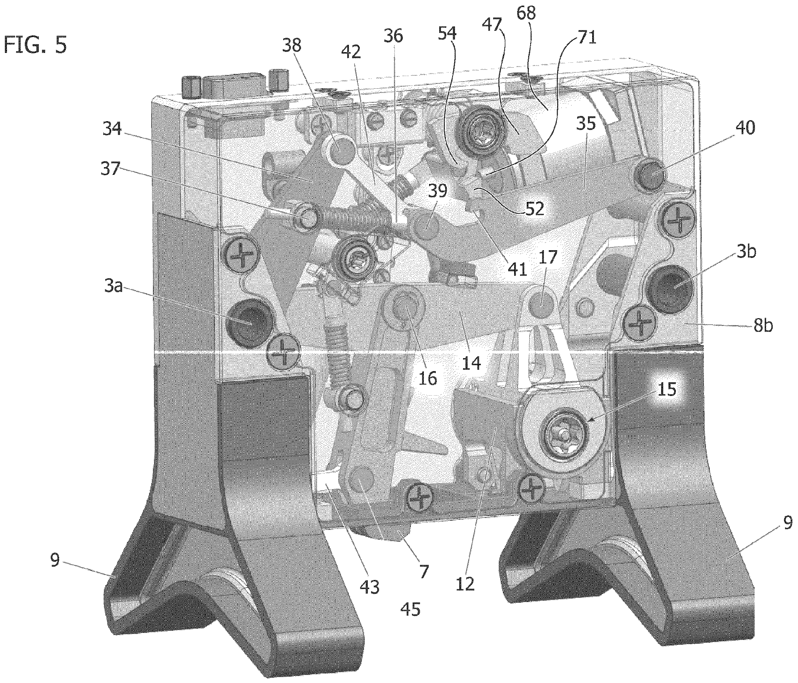

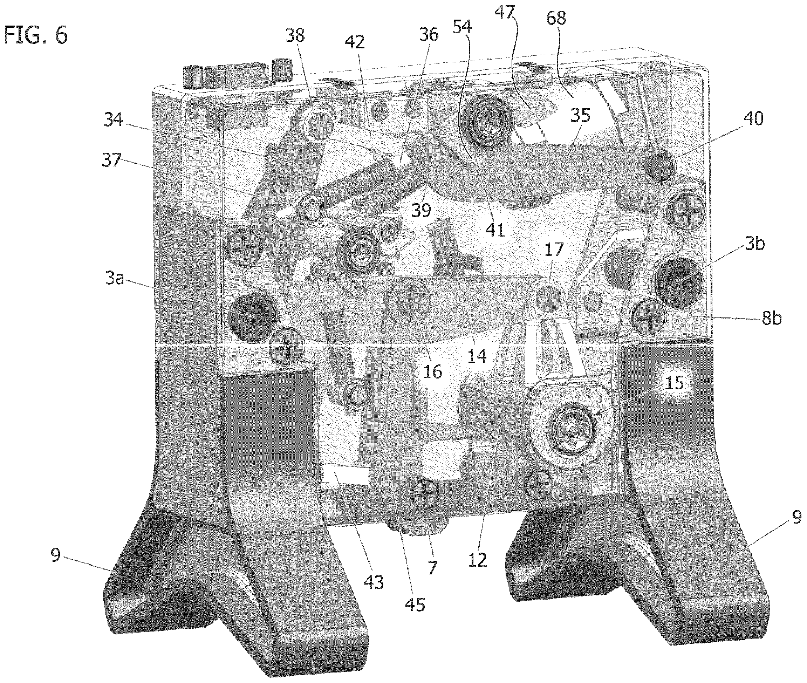

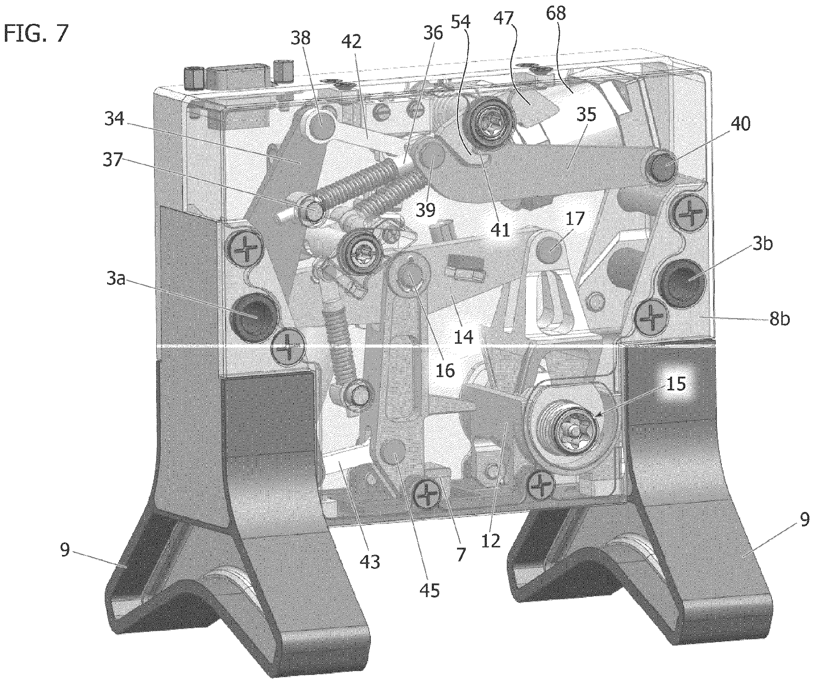

With reference to the figures 3-7, the movement kinematic mechanism of the hook 7 for tightening the Store 13 is shown. The images show the kinematic mechanism in its positions with the hook 7 in the rotated opening position, figures 3 and 5, in the retention position with bottom end-of-stroke, figure 6, and in the blocking position with top end-of-stroke, figures 4 and 7.

The fastening assembly which recovers the residual clearance is obtained by providing for that the hook 7 can move vertically as well as rotate backwards for the coupling and release of the Store 13. The surfaces 9, integrally joined with the support arms 8, remain stiffly constrained to the aircraft and they form a fixed abutment surface, on which the Store 13 can be placed ensuring high alignment repeatability and precision.

The vertical shift means of the hook comprise an arm 14 and a lifting system 15 comprising a saddle 18 which will be described below.

In detail, the vertical loads introduced 12 into the hook 7 through the ring are unloaded on the pin 16, loading the arm 14 in a bent fashion. The architecture of the system advantageously allows to divide the load into two forces that are smaller and quite similar to each other, and approximately equal to half of the introduced force, which are unloaded on the bushing 3a, and on the pin 17, respectively.

One of the through pins is inserted into the bushing 3a so as to be fitted to the aircraft; in this manner, at that point the arm 14 directly discharges the stress to the aircraft, avoiding to load the components of the restrain mechanism, which can therefore be lighter given that it does not need strengthening details.

On the right side of the figures 4-7, the force component of the hook 7 is discharged through the pin 17 on the lifting system 15 which is structurally constrained to the corresponding arm 8b and directly on its bushing 3b through it. Also in this case, the flow of the stresses is such to obtain the most efficient transfer possible thereof to the aircraft, minimising the required resistant sections and their weight therefore.

The hook 7 is subjected to an almost pure traction, and this reduces the interior stresses thereof and ultimately the weight. A similar observation may be made as regards the arm 14 which is subjected to simple cutting and bending, which optimises the structural efficiency thereof.

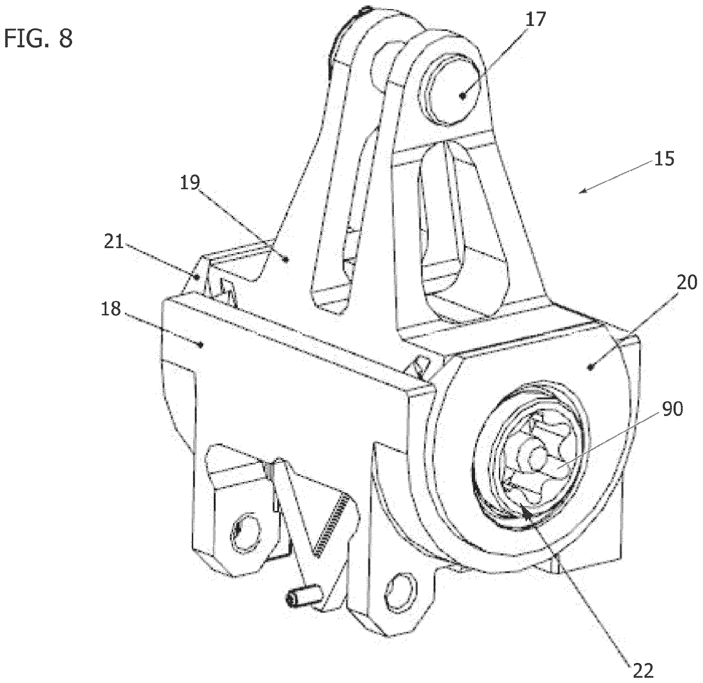

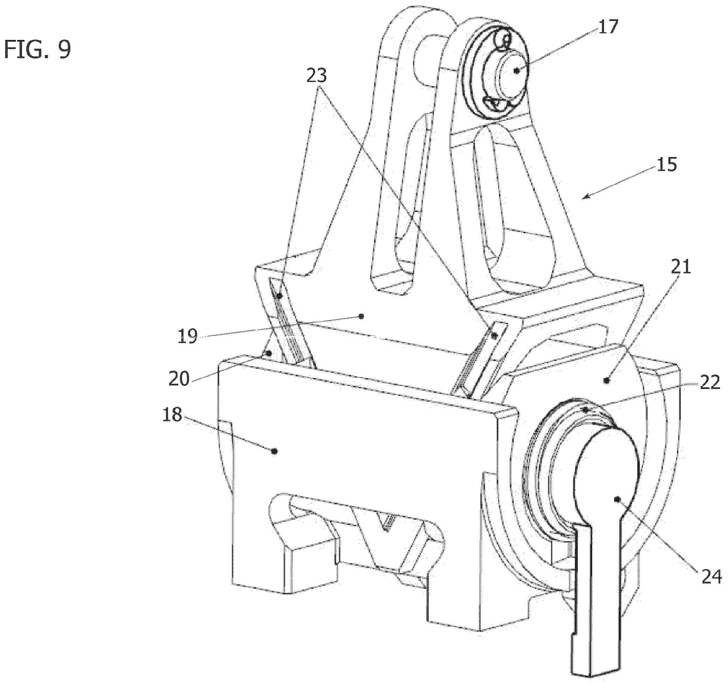

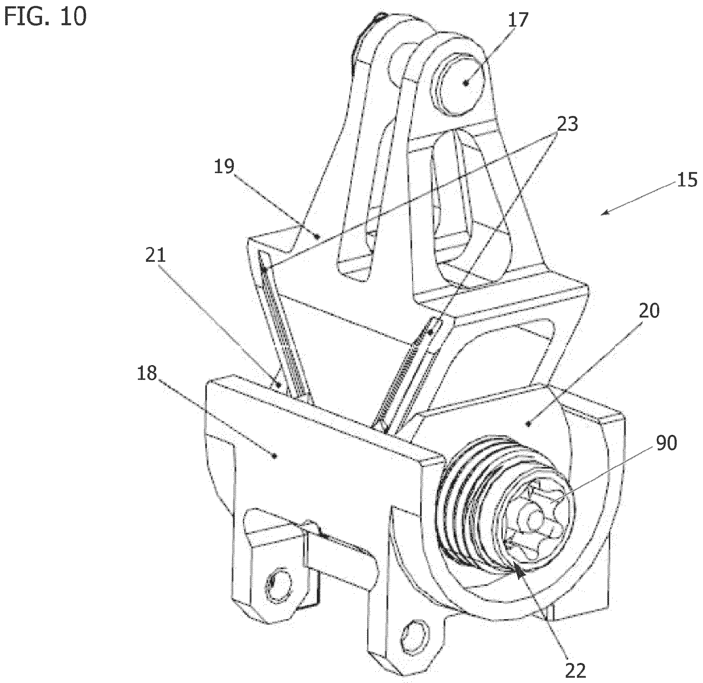

Figures 8-10 show the operation of the system 15 for lifting the hook 7. The images respectively show the system in its bottom, intermediate and top end-of-stroke positions.

The lifting system 15 advantageously exploits both the screw and wedge principle. In the saddle 18, having a cylindrical-shaped support surface, there may longitudinally slide two correspondingly-shaped blocks 20, 21, displaced by a screw 22 which carries, in its two halves, two threads with opposite rightward and leftward orientation, so as to respectively obtain the simultaneous approaching or moving apart of the blocks by rotating the screw 22. On the inner face, both of the two blocks 20, 21 have an inclined sliding surfaces in contact with the corresponding faces of the wedge 19; this allows to obtain the vertical motion of the wedge 19, of the pin 17 connected thereto, and ultimately of the hook 7, by actuating the screw through the opening corresponding to the operating point 6, which is accessible to the operator.

This allows to vertically actuate the hook 7 using the vertical shift means of the hook 7 which include the arm 14 and the lifting system 15 comprising the saddle 18. Basically, the lifting system 15 actuates the arm 14 so as to vertically shift the hook 7.

On the sides of the wedge 19 there are obtained grooves 23 in which there are engaged corresponding retentions obtained in the blocks 20, 21 so as to transform the wedge-like support into a bilateral constraint, therefore preventing the possible detachment of the wedge 19 from the blocks 20, 21 and preventing the uncontrolled lifting thereof. In this manner, the force described above coming from the hook 7 and introduced into the pin 17 is discharged through the wedge 19 on the blocks 20, 21 and therefore on the saddle 18 which, being stiffly constrained to the arm 8b, is discharged on the aircraft through the corresponding bushing 3b, therefore obtaining a very efficient load transfer system.

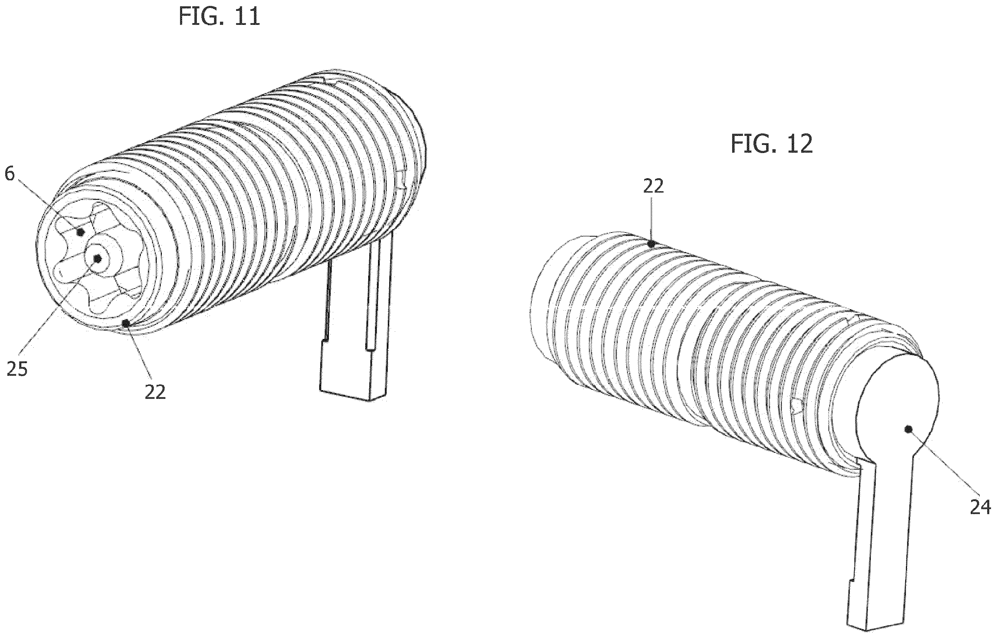

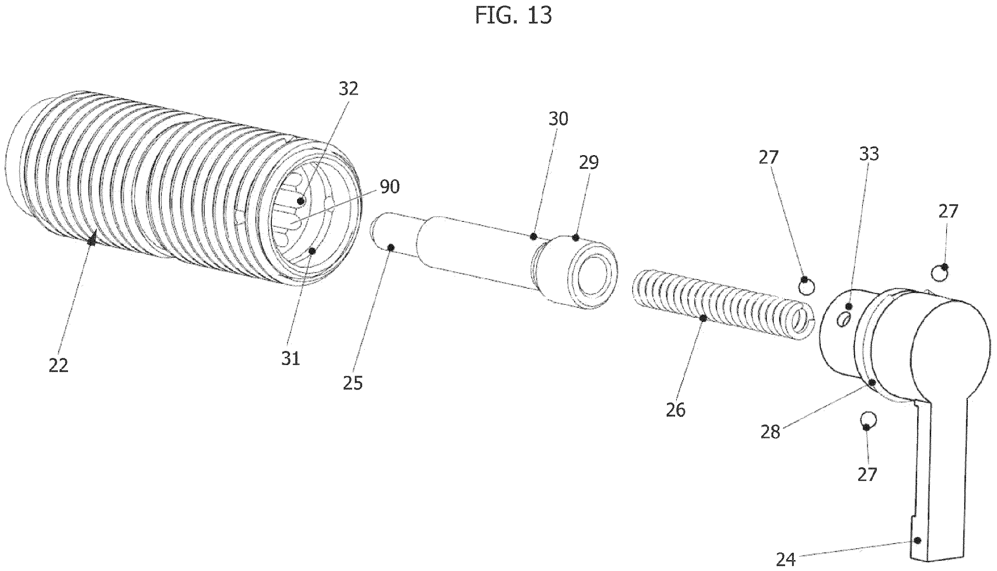

With reference to the figures 11-13, the wedge or screw-based lifting systems, such as the system 15 described above, are typically provided with a mechanical stop 24 so as to prevent the loosening thereof under operating vibrations. Such stop 24 is integrated in the body of the screw 22, obtaining an assembly that is reliable, simple and compact. Therefore, the system described herein consists in the stop 24, which has a tang which is engaged in a fixed opening obtained in the box-shaped body 2, integrally joined with the screw 22, preventing the rotation thereof, but supplementing a mechanism such to be able to make the mutual rotation of the two components idle upon request. The stop 24 is secured in an opening 90 obtained in the screw 22, and held in position by an elastic ring 28 which is engaged in a corresponding recess 31. The mutual rotation between the stop 24 and the screw 22 is allowed, but it is normally hindered by means of three balls 27 which, housed in three through transversal holes 33 of the stop 24, which are engaged in several grooved seats 32 in the screw 22. The balls 27 cannot be released from the engagement given that they are fittingly placed therein on the area 29.

Not shown in the figures, once inserted into the opening 6 by the operator, the operating key presses on the pin 25 causing the recession thereof; correspondingly, the surface 29 recedes into a recess in the stop 24, bringing the area 30, smaller in diameter, in its place. Given that they no longer have a support, the balls 27 are now free to collapse inwards, releasing themselves from the grooves 32 and allowing the mutual rotation of the screw 22 with respect to the stop 24. Upon removing the operating key, the spring 26 automatically returns the pin 25 and its surface 29 to the rest position, pushing the balls 27 outwards and restoring the blocking of the system.

Once again with reference to the figures 3-7, the hook 7 is connected to a mechanism which allows the opening thereof upon command so as to allow the coupling and release of the Store 13. To this end, the hook 7 is pivoted and suspended on the pin 16 which therefore advantageously carries out the dual function of transferring the load coming from the ring 12 and acting as a rotation fulcrum for the movement. The hook 7 is held in position and, whenever need arises, moved by means of a kinematic chain which, sequentially, comprises the pin 45, the connecting rod 43, the pin 44, the tilting beam 34 advantageously secured to the fixed bushing 3a so that it can also directly discharge the relevant loads on the aircraft as described above, the pin 38, the connecting rod 42, the pin 39, the connecting rod 35 and the fixed pin 40, pivoted to a support of the box-shaped body 2.

The lower arm of the beam 34, the left portion of the arm 14, the hook 7 and the connecting rod 43 form a first articulated parallelogram, while the upper arm of the beam 34, the connecting rod 42 and the connecting rod 35 form a second articulated parallelogram, constrained to the previous one by the joint movement of the two arms of the tilting beam 34. In this manner, the opening of the hook 7 is linked to the movement of the connecting rod 35, which is held in position by a constraint system comprising a restraint means 47, described below, which is engaged in the constraint hook 41.

Starting from the vertical downward force introduced into the ring 12 by the Store 13, one can follow the flow of the forces in the system, observing that the vertical component of the force is discharged on the pin 16, while the misalignment of the two forces generates on the hook 7 a slight horizontal component which compresses the connecting rod 43. This component is transmitted again in the beam 34 and it is reacted, still by compression, by the connecting rods 42 and 35 and then discharged on the fixed point 40.

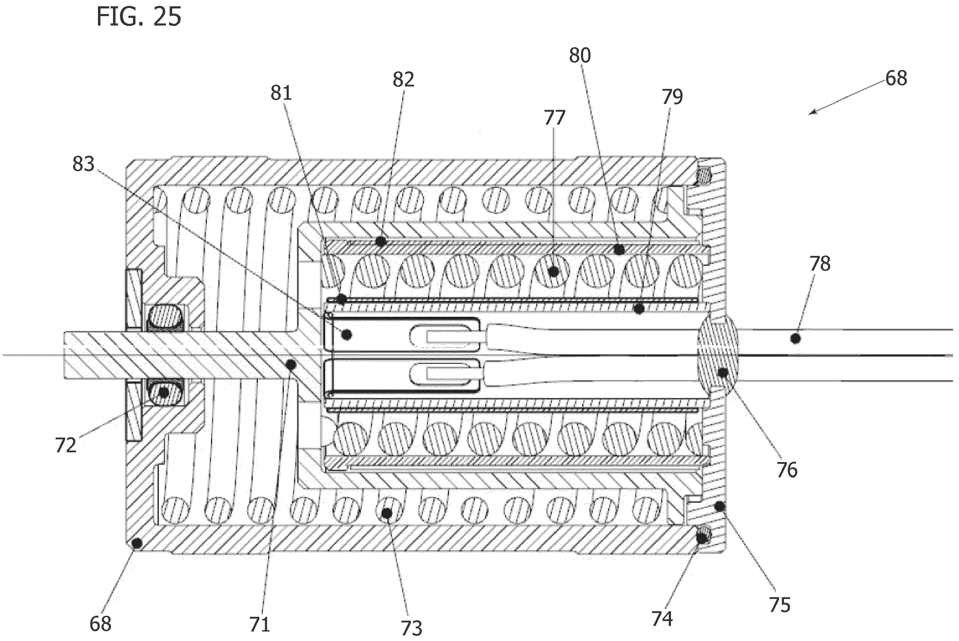

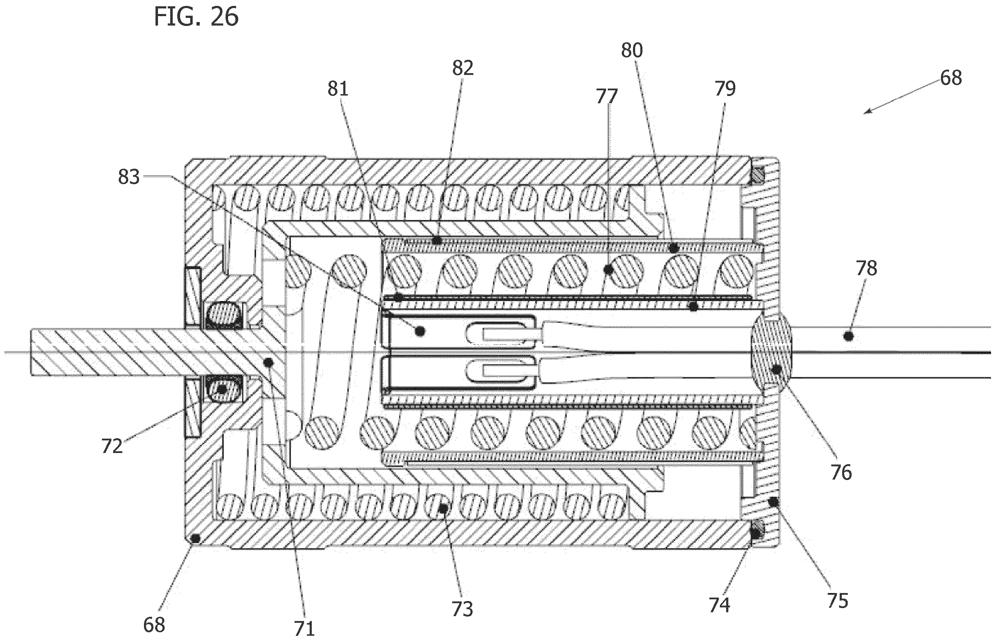

It can be observed that in the closing position, as shown in the figures 4, 6, 7, the connecting rods 42 and 35 are not precisely aligned with respect to each other, so that the peak loading suitably generates a slight downward transversal component, which lies on the constraint hook 41. Therefore, such component is only a small fraction of the initial vertical force, due to the de-multiplication effect introduced by the geometry of the alignments of the forces in the various components. This is significantly important given that, during the release, the opening of a stop 54 of the restraint means 47, which retains the constraint hook 41, is carried out through a mutual sliding of the two contact surfaces, which generates a sliding friction which is also a fraction of the force lying on the constraint hook 41 and therefore extremely small and proportional to the force initially introduced by the ring 12, which is to be overcome by a release actuator 68, shown in figures 25 and 26, to be addressed below. The push rod 36, pivoted in the fixed point 37 to a support of the box-shaped body 2 also acts on the pin 39. The spring acts by closing the connecting rods 42, 35 when the hook 7 is in the closed position, and opening them when the hook 7 is in the open position, thus making the kinematic mechanism bistable. In this manner, once opened, the kinematic mechanism will tend to remain in this condition stably; the closure can be achieved simply by pushing the Store 13 and the ring 12 integrally joined therewith upwards, in contact with the stud 46 obtained on the hook 7. The moment thus generated will pull on the connecting rod 43 and then in the kinematic chain, and will bring the push rod 36 firstly to its dead centre where the thrust axis of the rod 36 is aligned with the axis of connecting rod 35 and therefore with the rotation centre of the fixed point 40 and then overcoming it. Therefore, the thrust of the spring will bring the system into the closing position. This advantageously allows to obtain a fully automated coupling system, so that the only action required of the operator is to push Store 13 against the restrain mechanism in order to cause the coupling thereof.

The kinematic mechanism is provided with the constraint hook 41 in order to be kept closed, given that the vertical force lying on the ring 12, given the high mass of the currently predictable Stores 13, may be of such magnitude that it causes on the connecting rod 42 a thrust that is sufficient to overcome the closing thrust of spring 36, causing the opening of the kinematic mechanism and therefore the release of Store 13. It should be noted that the orientation of the arms of the first articulated parallelogram remains substantially unchanged upon variation of the height of the hook 7 as a result of the vertical movement kinematic mechanism. Therefore, the opening system thus described advantageously retains its functionality irrespective of the height of hook 7.

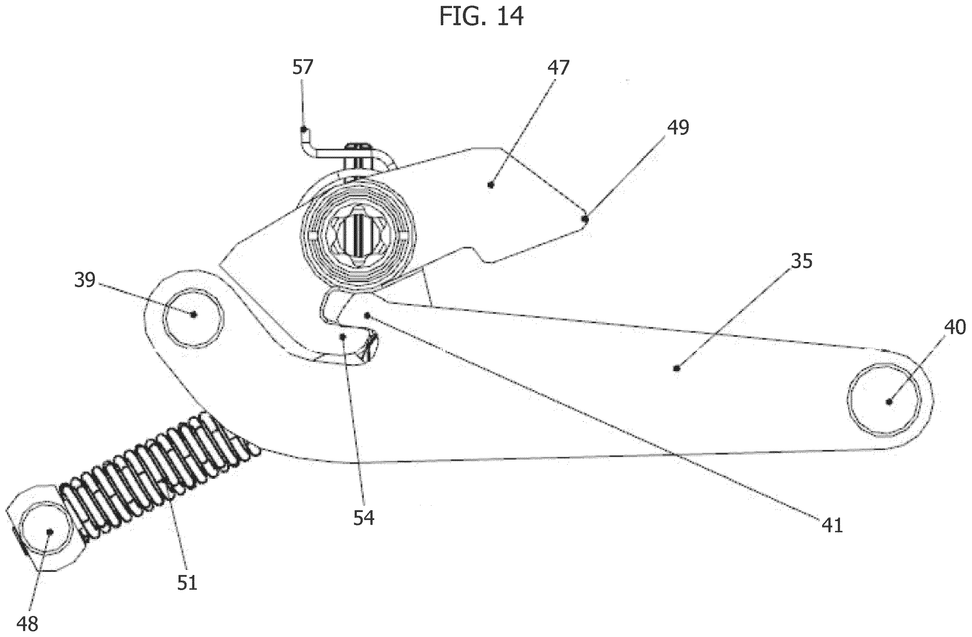

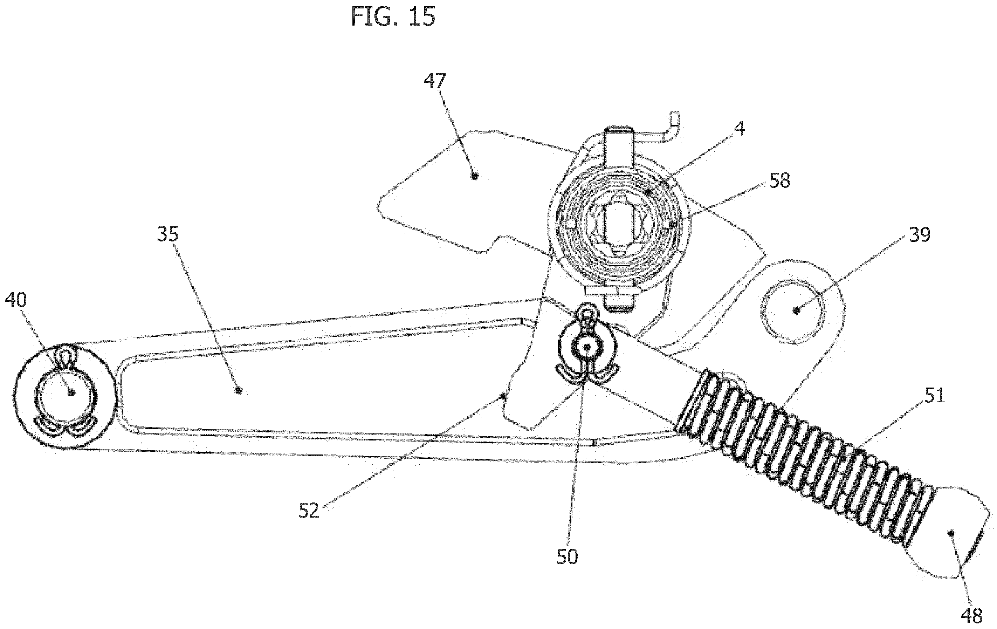

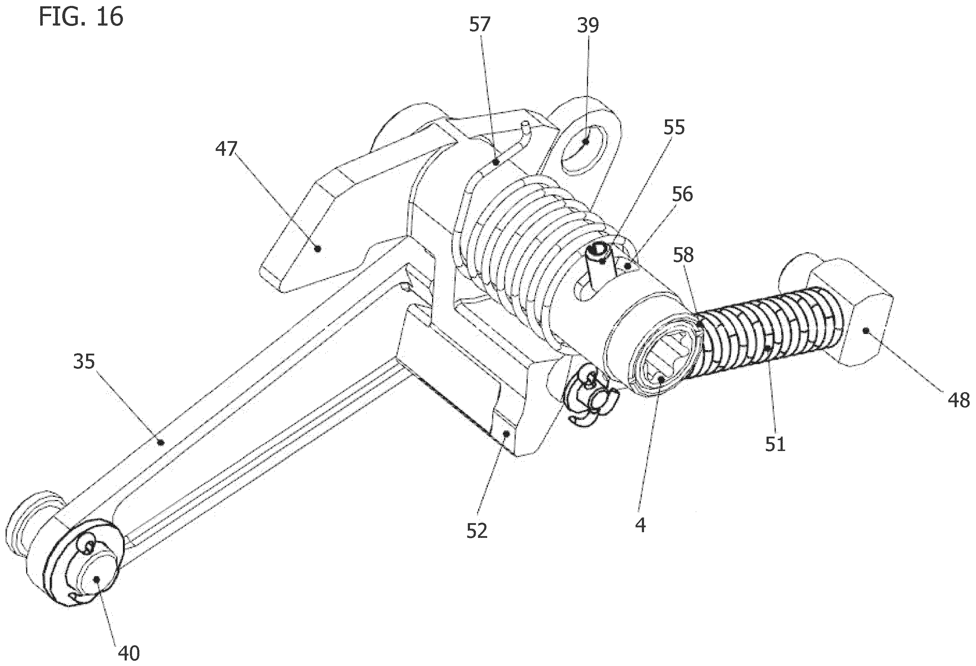

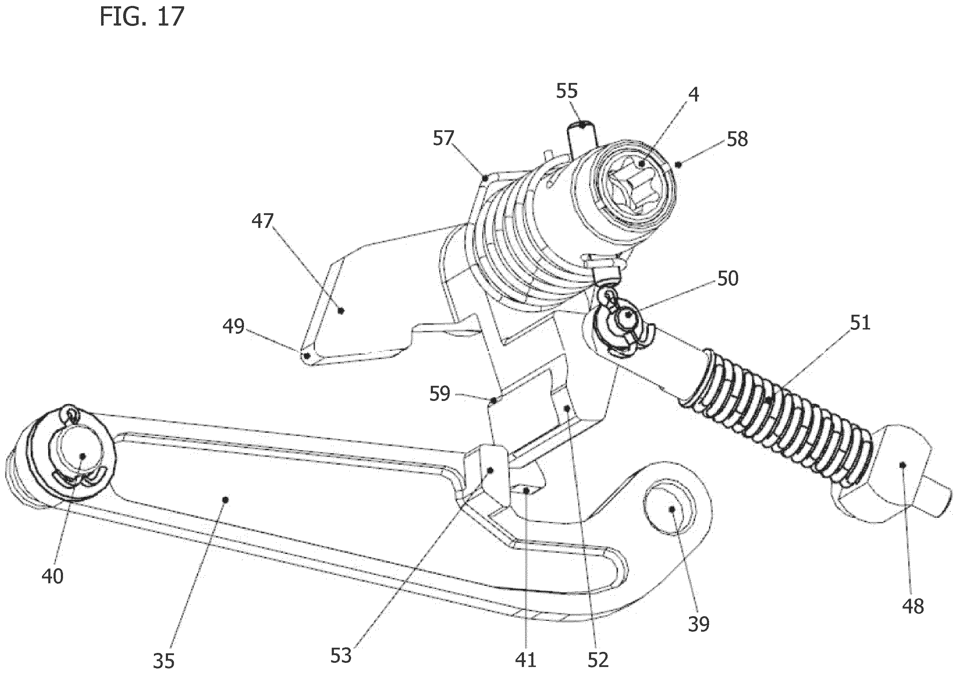

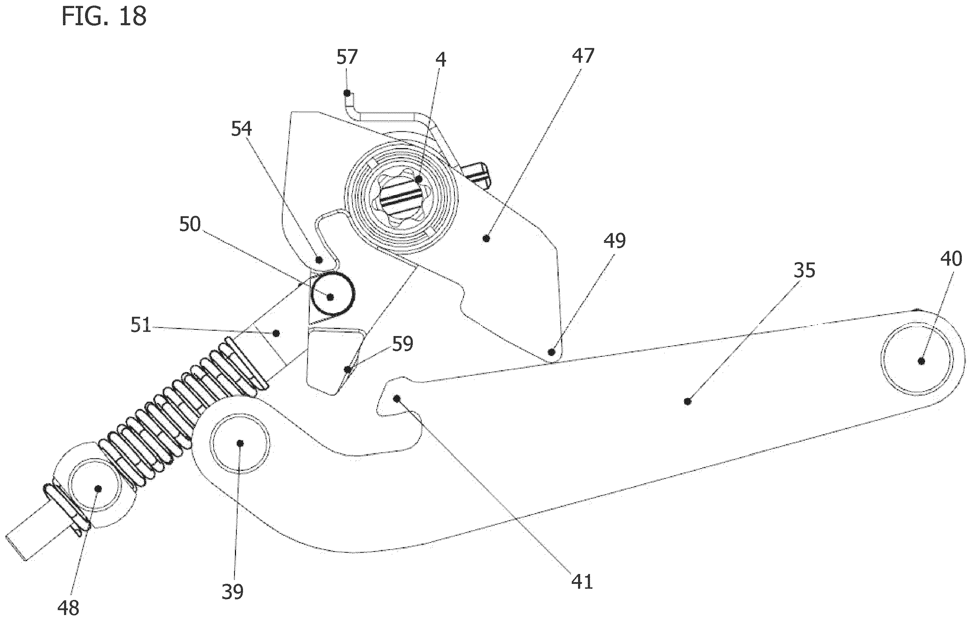

With reference to figures 14-18 the release stop may rotate supported by the box-shaped body 2, and it consists of two shafts, coaxial and de-coupled, the innermost one housing operating point 4, accessible from both sides of box-shaped body 2, the outermost, the restraint means 47, integrally joined with the hook stop 54 designed to be engaged with the constraint hook 41 described above. In the inner shaft 4, there is fitted a transversal pin 55, designed to drive the constraint means 47 through the cavity 56. Besides preventing the inner shaft 4 from sliding out of the constraint means 47, the pin 55 also acts as an end-of-stroke, resting with the upper end on an abutment obtained in the side of the box-shaped body 2, and as the engagement point of the reaction spring 57, also engaged in box-shaped body 2. The rotation of the constraint means 47 in the opening direction is counteracted by the push rod 51 pivoted in the body 50 on one side, and in the fixed point 48, pivoted in a support of the box-shaped body 2.

In order to release, the constraint means 47 may be operated manually by the operator through operating point 4, or remotely by an electromechanical actuator 68, shown in figures 5,6,7,25 and 26, with limited stroke and thrust force, acting restingly with a push rod 71 on the body 52 integrally joined with the constraint means 47. Although the thrust of the actuator 68 is sufficient to overcome the torque generated by the sliding friction on point 41 in any possible condition due to the de-multiplication effects described above, the short opening stroke of the constraint means 47 and the small torque required make the mechanism too sensitive for manual actuation, therefore requiring de-coupling between the operating point and the actual release system. The reaction spring 57 therefore increases the torque felt by the operator for the manual release without being discharged on the release system, same case applying to the cavity 56 which introduces an initial actuation blind spot, which the operator must overcome before actually actuating the release mechanism. This helps to prevent the operator from feeling the actuation as too precarious and safeguards the limits of the electromechanical actuator. On the operating point 4, there can be externally obtained notches 58, which are advantageously highlighted in contrasting colours, so as to be able to deduce the status of the kinematic mechanism through a simple visual inspection.

When the kinematic mechanism is open, the tooth 53 rests against the abutment 59 holding the constraint means 47 in the open position and ready for re-coupling, in order to prevent the constraint hook 41 and the corresponding hook 54 from hindering each other, tripping over each other when they go over during the closing phase.

The description outlined above shows that release of the kinematic mechanism is caused by the weight of the Store 13 suspended thereon. Should there arise the need to open to open the kinematic mechanism in the absence of a Store 13, there has been provided for tooth 49 integrally joined with the constraint means 47 so that during manual opening the connecting rod 35, it is pushed beyond the dead centre of the push rod 36, until the full opening of the kinematic mechanism has been achieved.

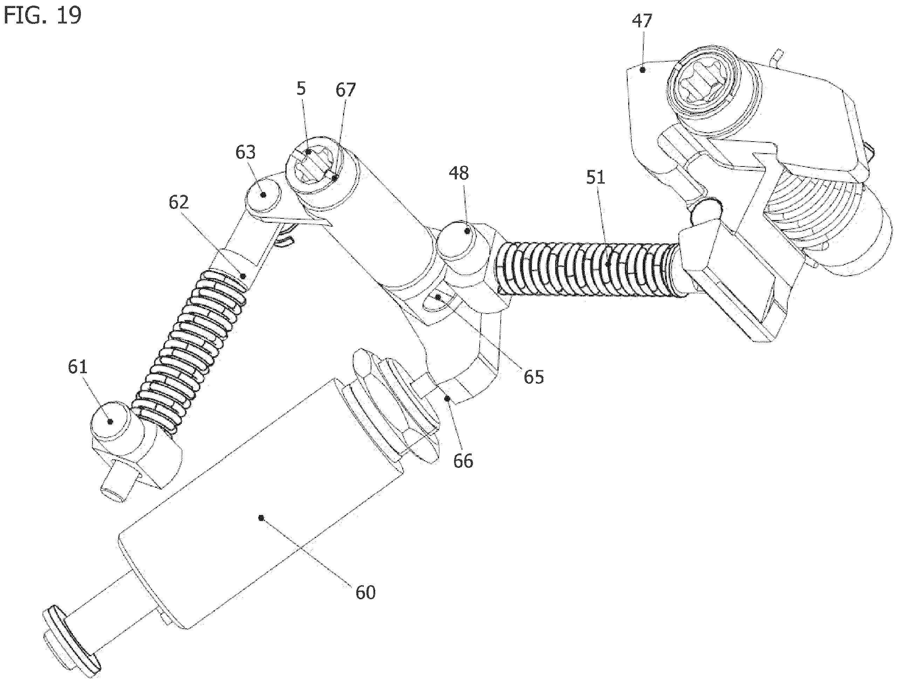

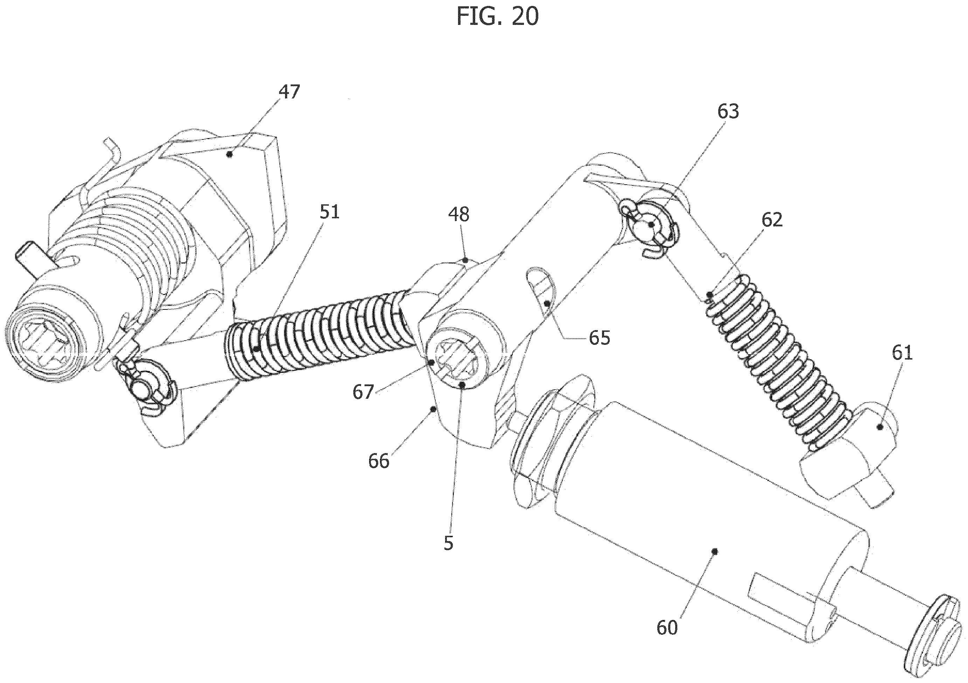

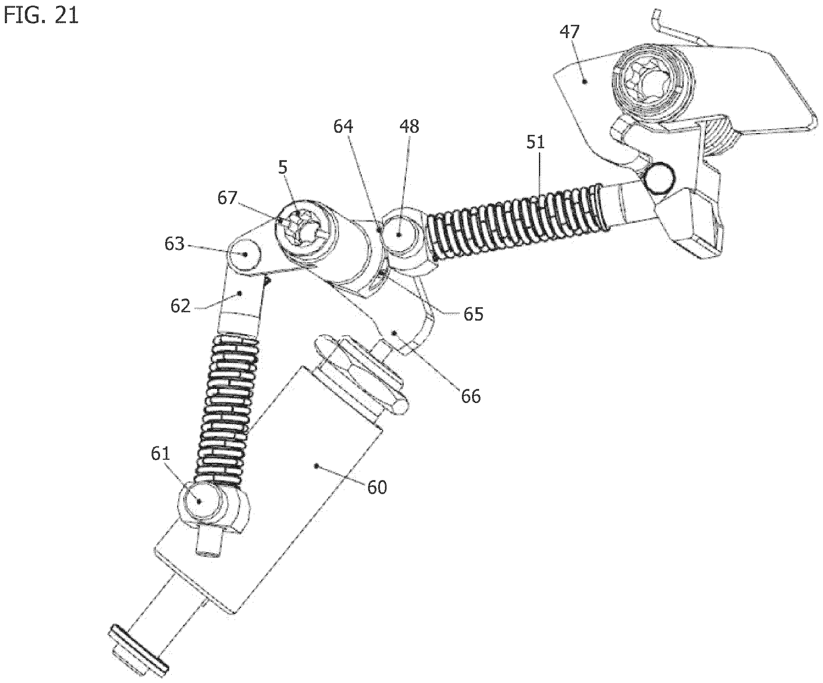

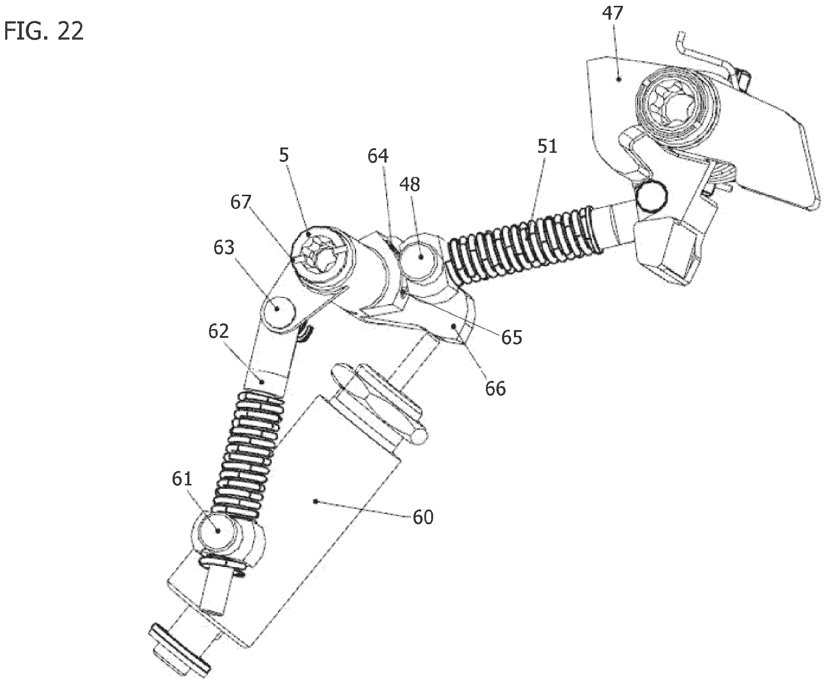

With reference to figures 19-24, a release safety system is provided for to prevent unwanted opening actuations of the kinematic mechanism. The safety system rotates supported by box-shaped body 2 and can be released upon request, either manually by the operator by actuating the operating point 5, accessible from both sides of the restrain mechanism, or remotely by means of a suitable electromechanical actuator 60, hereinafter referred to as "IFOL" In-Flight Operated Lock, which allows to repeatedly disengage or release the safety system at any operative step, whether in flight or on the ground. During actuation, the actuator 60 rests on the shaped lever 66, causing the rotation of the operating point 5. A thrust spring 62 acts on the one hand in point 63, on the other in the fixed point 61, which is pivoted on a support of the box-shaped body 2, and it acts constantly to automatically return the safety system to the blocking condition, once through with the actuation. With the safety system blocked, the end of the push rod 51 finds in front of its stroke the blind cavity 64 which, preventing its movement, actually blocks the rotation of the constraint means 47 and therefore the release of the kinematic mechanism. With the safety system released, the rotation of point 5 brings in front of the end of the push rod 51 the shaped hole 65, which passes transversally through the shaft, which provides space for the through-passing of the rod 51 and therefore allows the release of the kinematic mechanism. The blind cavity 64 is shaped with a recessed opening so that, as the thrust of the rod 51 continues, the end of the rod is engaged in the opening so as to prevent the rotation of the operating point 5, and it is therefore impossible to remove the safety as long as the release actuator 68 remains powered. This condition is referred to as "Lock Shut Firing". This detail introduces a further degree of reliability in the system, given that the release strictly requires that the sequence provided for be strictly complied with. Therefore, the safety system must first be opened, and only then the release system is actuated only subsequently. On the contrary, an actuation of the release system prior to the opening of the safety system inhibits both the release and the removal of the safety, until the "Lock Shut Firing" situation has been resolved. This solution means that there is no need to provide for further safety blocking systems, for example by inserting pins to mechanically hinder the movement of the kinematic mechanism, not even during the manual release step. Therefore, the operator wishing to cause the release must simultaneously insert in two different operating points 4, 5 two different operating keys and actuate both of them at different times following the recommended sequence. This presupposes appropriate attention and a clear awareness of the actions taken. Also in this case, on the operating point 5, there are externally obtained notches 67, which are advantageously highlighted in contrasting colours, so as to be able to deduce the status of the system through a simple visual inspection.

The interconnection of the various kinematic mechanisms causes tooth 53 to hinder the return of the constraint means 47, of the operating point 4 and, as a result, of the rod 51 connected thereto from returning to the rest position in the hook open condition. In this manner, the end of the rod remains engaged in cavity 65, precluding the return of the operating point 5 to the rest condition until the closure of the kinematic mechanism. Therefore, by visually inspecting the mutual position of operating points 4 and 5, which are visible externally through the abutments 58 and 67, the operator can easily discern the status of the system, which can be summarised in the table below.

| Status of the system | Operating point 4 | Operating point 5 |
|---|---|---|
| Hook closed, system safe | Closed at rest | Safe at rest |
| Hook closed, system safe, but in "Lock Shut Firing" condition resolve by stopping the opening actuation under point 4 | Closed at rest, and forced to open by a manual actuation, or by remote control | At rest, but cannot be rotated neither manually nor remotely |
| Hook closed, system ready to release the Store 13 | At rest | Rotated, release enabled |
| Hook open, ready to receive a new Store 13 | Rotated | Rotated |
| Status not enabled, probable malfunction of the kinematic mechanism | Rotated | At rest |

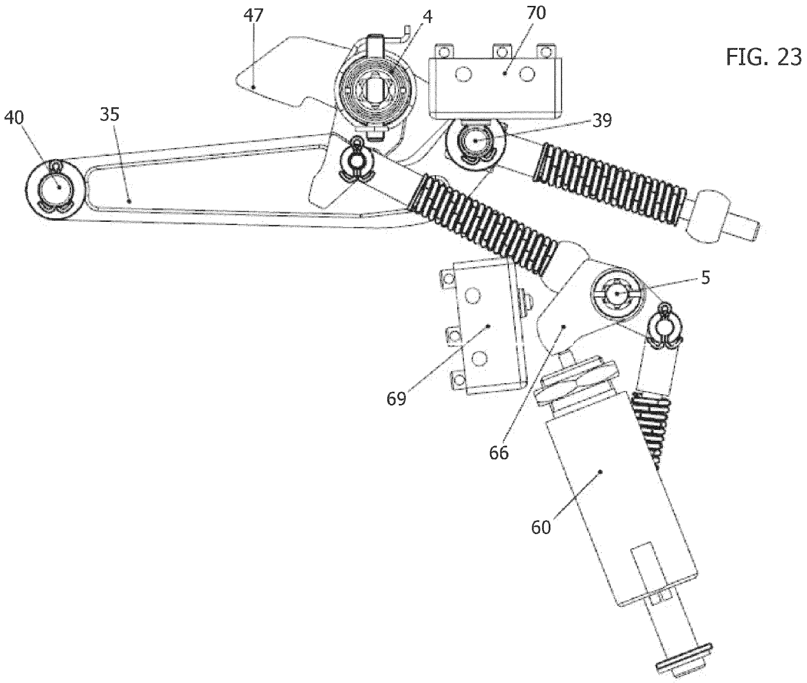

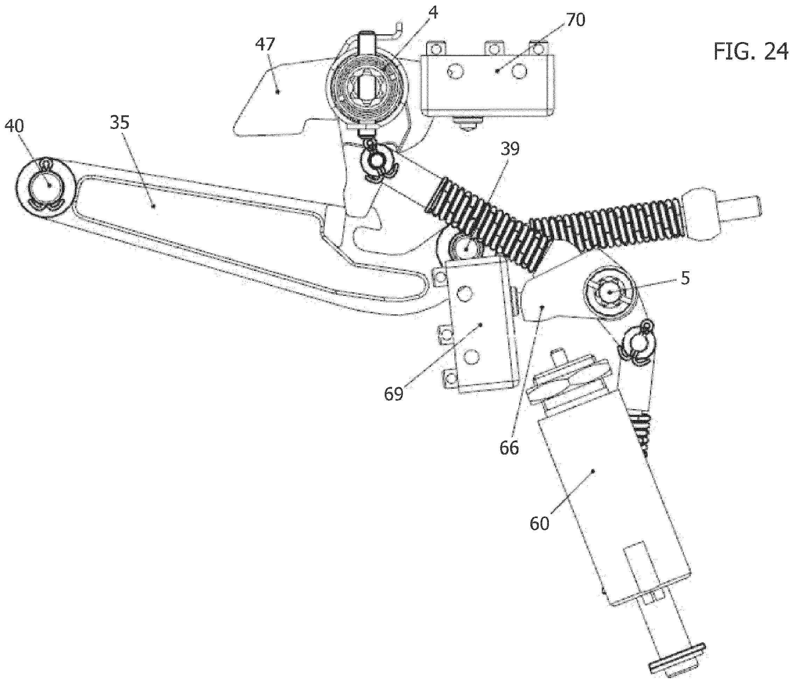

Now, with reference to figures 23 and 24, the status of the release system related to operating point 4, and that of the security system of the operating point 5, are remote controlled by means of two microswitches, respectively 70 and 69, and made available to the aircraft management system through the connector 11, through which also the control signals for two electromechanical actuators, the release actuator 68 and the IFOL actuator 60 respectively pass through.

Without prejudice to the external overall dimensions of the assembly, its mechanical interface, and the mutually compatible thrust force and actuation stroke performance characteristics, the electromechanical release actuator 68 mentioned above can essentially be based on two different possible embodiments.

The first solution, not shown in the figures, provides for the use of an electromagnetic actuator, comprising a coil which generates a magnetic field, and a slider attracted into the magnetic field during excitation, to which there is connected an actuator stem, which transmits the force thus generated to the external.

With reference to figures 25 and 26, the second solution provides for adopting a component a component made of a shape memory metal alloy in the actuator. The peculiarity of such material lies in changing its crystalline structure, and therefore its mechanical characteristics, as the temperature changes.

Above a specific temperature dependent on the composition of the alloy, in the use according to the invention of about 90°C, called the "activation temperature", the material offers the mechanical strength and stiffness typical of a metal component, opposing a stress imposed by the reaction force, the corresponding reversible deformation and elastic return, within the typical limits of elastic behaviour, which once exceeded the component yields to an irreversible plastic deformation.

Below a second specific "transition" temperature, in the use according to the invention of about 50°C, the crystalline structure of the material undergoes a transformation such that a small stress is sufficient to literally collapse the component on itself, the reaction of the material becomes insignificant, and the corresponding deformation can be, within certain limits, tens of times greater than that which can be elastically obtained. When the component is heated again, the material restores the original crystalline structure and the component regains its initial shape and mechanical characteristics.

It was opted to exploit the characteristics of this material in the assembly described below.

With reference to figures 5, 25 and 26, the body of the actuator 68, with its cover 75, receive a return spring 73, made of conventional material, permanently compressed on a bell housing on which there is obtained the push rod 71 which acts on the body 52 integrally joined with the constraint means 47. The push rod 71 is actuated by an extendable component 77 made of a shape memory metal alloy (material) which also takes the form of a spring, and at room temperature, that is the use temperature of the restrain mechanism, that is below the activation temperature, it is collapsed and offers minimal reaction. Once heated, by means of two electrically heated adhesive flexible strips 81, 82, the extendable component 77 tends to return to its original elongated shape, recovering its mechanical characteristics, and offering a thrust such to oppose and overcome the spring 73, providing the push rod 71 with the desired force and stroke to push the body 52 by actuating the constraint means 47. Upon cooling down, the component 77 will collapse under the thrust of spring 73 and return the system to its rest condition. The heating system consists of two adhesive flexible strips 81, 82, glued respectively to two support tubes 79, 80. The power is supplied by the four cables 78, two for each heater, each of which are welded on a track 83, the two cables which supply the external heater are arranged in a mirror-like fashion with respect to those shown, and they are not shown given that they are positioned behind them. A series of seals 72, 74, 76 suitably seal the internal chamber from the surrounding environment.

The advantages of the described shape memory actuator 68, compared to the conventional electromagnetic actuator, referred to as "b" for the sake of simplicity, are summarised below.
1 The actuator 68 offers the same mechanical interface as the actuator b, and therefore it can replace it without having to change the restrain mechanism;
2 the actuator 68 offers the same actuation stroke, and offers significantly higher thrust performance compared to b, about 50 % increase;
3 the thrust force of the actuator 68 is not dependent on the supply voltage, whereas the thrust force of b decreases significantly as the actuation voltage decreases;
4 the thrust force of the actuator 68 is greater in the first part of the actuation stroke and then decreases, resembling a spring, the extendable component 77 is discharged, while the spring 73 is loaded, while the thrust force of b has its peak in the last part of the stroke due to the progressive decrease of the air gap between the movable part and the electromagnet. This is to the advantage of actuator 68 given that the implementation typically requires overcoming initial static friction and inertia, and then simply continuing with a lower resistance to the end-of-stroke;
5 the actuator 68 comprises two heaters 81, 82 electrically independent and powered separately. This provides redundancy which increases the reliability of the actuator 68 with respect to that b, which has only one power supply as long as the intervention time for the actuator 68 may be delayed, in the case of actuation with only one heater;
6 the weight of actuator 68a may be significantly reduced compared to the similar actuator b, this could result in reducing weight by approximately 40 %.

By contrast, the reaction time of b remains basically unchanged as the actuation voltage changes in the order of tens of milliseconds, while the reaction time of the actuator 68 may be longer in the order of hundreds of milliseconds, and it can tend to be delayed further as the actuation voltage drops.

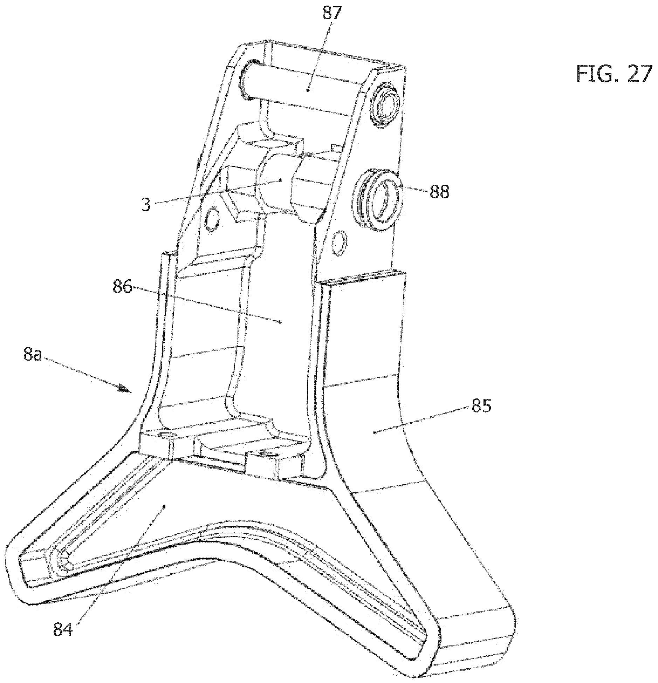

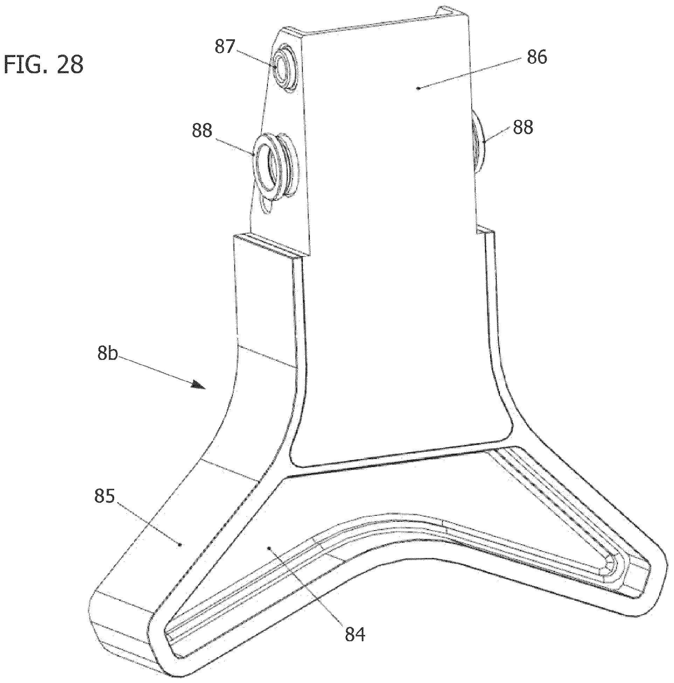

Now, with reference to figures 27, 28, the two support arms 8a,8b are designed with a mixed structure to maximise the strength and stiffness reducing weight to the uttermost. Each consists of a light alloy shell 86, on which they are glued with structural adhesive of the arms 85 made of carbon fibre. The shape of the arms maximises the strength which can be obtained by the material, with the minimum corresponding weight. In order to stabilise the lower arc of the arms, a shear-stressed light alloy core 84, which significantly increases the bending stiffness of the arms, is glued with structural adhesives. In the upper part of the shell 86 there are obtained the seats for the sleeves 3a,3b as previously discussed, and for a column 87 which aligns the two half shells 2 and allows the structural joining thereof, obtaining a stiff and light assembly. Two reinforcement bushings 88 are secured onto the sleeves 3a,3b, and provide the support surface for transferring the lateral forces to the aircraft.

Lastly, with reference to figure 29, as described above, there should be provided for a suitable support in order to absorb the lateral loads introduced by the Store 13; to this end, the walls of the opening 10 have been shaped so as to come into contact with the lateral surfaces of the suspension ring 12 and keep it appropriately centred with the hook 7.

Obviously, the construction details and the embodiments may widely vary with respect to what has been described and illustrated, without departing from the scope of protection of the present invention as defined in the claims that follow.

## Claims

1. Restrain and release mechanism for an externally airborne load (13) provided with a suspension ring (12), said restrain and release mechanism comprising:
a box-shaped body (2) having a lower opening (10), a pair of support arms (8a, 8b) for the load (13) protruding from the box-shaped body (2) on opposite sides with respect to said opening (10),
a hook (7) accessible through said opening (10) and provided with an upper pivot pin (16),
said hook (7) being designed to releasably couple with said suspension ring (12) of the load (13) and being rotatable around said pin (16) between an open position and a retention position of said suspension ring (12) of the load (13),
**characterised in that** the restrain and release mechanism comprises vertical shift means configured to vertically shift said hook (7) from the position of retaining the load (13) to a position for blocking the load (13), raised with respect to the retention position, in which the load (13) is pressed against said pair of support arms (8a,8b).

2. Restrain and release mechanism according to claim 1, **characterised in that** it comprises a system for constraining the hook (7) in said position for blocking the load (13),
said constraint system comprising an actuator (68) provided with a push rod (71), a return spring (73), and an extendable component (77), said constraint system further comprising a constraint hook (41) connected to said hook (7), and constraint means (47) connected to said box-shaped body (2), said constraint means (47) being rotatable through the action of said push rod (71) actuated by said extendable component (77) between an rest position and a constraint position constraining said constraint hook (41).

3. Restrain and release mechanism according to one of the preceding claims, **characterised in that** said vertical shift means of said hook (7) comprise a lifting system (15), of the so-called screw and wedge type, which includes:
a wedge (19),
a pair of blocks (20,21),
a double-threaded screw (22),
said blocks (20,21) having respective inclined sliding surfaces in contact with corresponding faces of the wedge (19),
said wedge (19) being vertically displaceable inside said saddle (18) by mutually approaching or spacing apart said pair of blocks (20,21) displaced by said a double-threaded screw (22).

4. Restrain and release mechanism according to claim 3, **characterised in that** said lifting system (15) comprises a mechanical stop (24) secured in an axial seat (90) of said screw (22), said stop (24) being movable between a rest position and a position for blocking the rotation of said screw (22) by engaging at least one ball (27) integral with said stop (24) with a plurality of grooves (32) provided in the seat (90) of said screw (22).

5. Restrain and release mechanism according to one of the preceding claims, **characterised in that** each of said support arms (8a,8b) comprise a shell (86) made of a metal alloy, each shell (86) is coupled with a pair of protruding arms (85) made of carbon fibre.

6. Restrain and release mechanism according to one of the preceding claims, **characterised in that** said support arms (8a,8b) comprise respective support surfaces (9) shaped according to the shape of said load (13).

7. Restrain and release mechanism according to one of the preceding claims, **characterised in that** the lateral walls of said opening (10) are shaped to be in contact with the lateral surfaces of said suspension ring (12) in said position for blocking the load (13).

8. Restrain and release mechanism according to claims 2-7, **characterised in that** said extendable component (77) is made of material comprising a shape memory metal alloy having an activation temperature above room temperature, that is the normal temperature of use of said constraint mechanism, said extendable component (77) having a collapsed configuration at a temperature below the activation temperature and an extended configuration at a temperature above the activation temperature; said push rod (71) of said actuator (68) of said constraint means of the hook (7) being actuatable to rotate said constraint means (47) in said constraint position through the thrust obtained by the controlled heating at a temperature above the activation temperature of said extendable component (77), the heating of the extendable component (77) being obtained by means of two electrically heated flexible adhesive strips (81, 82).

9. Restrain and release mechanism according to one of the preceding claims, **characterised in that** said vertical shift means of said hook (7) comprise an arm (14).

## Patentansprüche

1. Rückhalte- und Freigabemechanismus für eine extern luftgetragene Last (13), die mit einem Aufhängungsring (12) versehen ist, wobei der Rückhalte- und Freigabemechanismus Folgendes umfasst:
einen kastenförmigen Körper (2) mit einer unteren Öffnung (10), einem Paar von Tragarmen (8a, 8b) für die Last (13), die von dem kastenförmigen Körper (2) auf gegenüberliegenden Seiten in Bezug auf die Öffnung (10) herausragen,
einen Haken (7), der durch die Öffnung (10) zugänglich ist und mit einem oberen Drehzapfen (16) versehen ist,
wobei der Haken (7) dazu ausgelegt ist, lösbar mit dem Aufhängungsring (12) der Last (13) gekoppelt zu werden,
und um den Stift (16) zwischen einer offenen Position und einer Rückhalteposition des Aufhängungsrings (12) der Last (13) drehbar ist,
**dadurch gekennzeichnet, dass**
der Rückhalte- und Freigabemechanismus vertikale Verschiebemittel umfasst, die dazu ausgelegt sind, den Haken (7) vertikal von der Position zum Zurückhalten der Last (13) in eine Position zum Blockieren der Last (13) zu verschieben, die in Bezug auf die Rückhalteposition angehoben ist, in der die Last (13) gegen das Paar von Tragarmen (8a, 8b) gedrückt wird.

2. Rückhalte- und Freigabemechanismus nach Anspruch 1, **dadurch gekennzeichnet, dass** er ein System zum Zurückhalten des Hakens (7) in der genannten Position zum Blockieren der Last (13) umfasst,
wobei das Beschränkungssystem einen Aktuator (68) umfasst, der mit einer Schubstange (71), einer Rückstellfeder (73) und einer ausfahrbaren Komponente (77) versehen ist, wobei das Beschränkungssystem ferner einen Beschränkungshaken (41), der mit dem Haken (7) verbunden ist, und ein Beschränkungsmittel (47), das mit dem kastenförmigen Körper (2) verbunden ist, umfasst, wobei das Beschränkungsmittel (47) durch die Wirkung der Schubstange (71), die durch die ausfahrbare Komponente (77) betätigt wird, zwischen einer Ruheposition und einer Beschränkungsposition, die den Beschränkungshaken (41) beschränkt, drehbar ist.

3. Rückhalte- und Freigabemechanismus nach einem der vorhergehenden Ansprüche, **dadurch gekennzeichnet, dass** die vertikalen Verschiebemittel des Hakens (7) ein Hubsystem (15) vom sogenannten Schrauben- und Keiltyp umfassen, das Folgendes umfasst:
einen Keil (19),
ein Paar von Blöcken (20, 21),
eine Doppelgewindeschraube (22),
wobei die Blöcke (20, 21) jeweils geneigte Gleitflächen aufweisen, die mit entsprechenden Flächen des Keils (19) in Kontakt stehen,
wobei der Keil (19) innerhalb des Sattels (18) vertikal verschiebbar ist, indem das durch die Doppelgewindeschraube (22) versetzte Paar von Blöcken (20, 21) einander genähert oder voneinander entfernt wird.

4. Rückhalte- und Freigabemechanismus nach Anspruch 3, **dadurch gekennzeichnet, dass** das Hubsystem (15) einen mechanischen Anschlag (24) aufweist, der in einem axialen Sitz (90) der Schraube (22) befestigt ist, wobei der Anschlag (24) zwischen einer Ruhestellung und einer Stellung zum Blockieren der Drehung der Schraube (22) bewegbar ist, indem mindestens eine Kugel (27), integral mit dem Anschlag (24), mit mehreren Nuten (32) in dem Sitz (90) der Schraube (22) in Eingriff gebracht wird.

5. Rückhalte- und Freigabemechanismus nach einem der vorhergehenden Ansprüche, **dadurch gekennzeichnet, dass** jeder der Tragarme (8a, 8b) eine Schale (86) aus einer Metalllegierung umfasst, wobei jede Schale (86) mit einem Paar herausragender Arme (85) aus Kohlefaser gekoppelt ist.

6. Rückhalte- und Freigabemechanismus nach einem der vorhergehenden Ansprüche, **dadurch gekennzeichnet, dass** die Tragarme (8a, 8b) jeweils entsprechend der Form der Last (13) geformte Stützflächen (9) aufweisen.

7. Rückhalte- und Freigabemechanismus nach einem der vorhergehenden Ansprüche, **dadurch gekennzeichnet, dass** die Seitenwände der Öffnung (10) in der Position zum Blockieren der Last (13) so geformt sind, dass sie mit den Seitenflächen des Aufhängungsrings (12) in Kontakt sind.

8. Rückhalte- und Freigabemechanismus nach den Ansprüchen 2-7, **dadurch gekennzeichnet, dass** die ausfahrbare Komponente (77) aus einem Material hergestellt ist, das eine Formgedächtnismetalllegierung mit einer Aktivierungstemperatur oberhalb Raumtemperatur, das heißt der normalen Anwendungstemperatur des Beschränkungsmechanismus, umfasst, wobei die ausfahrbare Komponente (77) eine eingeklappte Konfiguration bei einer Temperatur unterhalb der Aktivierungstemperatur und eine ausgefahrene Konfiguration bei einer Temperatur oberhalb der Aktivierungstemperatur aufweist; wobei die Schubstange (71) des Aktuators (68) der Beschränkungsmittel des Hakens (7) betätigbar ist, um die Beschränkungsmittel (47) durch den durch das gesteuerte Erwärmen bei einer Temperatur oberhalb der Aktivierungstemperatur der ausfahrbaren Komponente (77) erhaltenen Schub in der Beschränkungsposition zu drehen, wobei die Erwärmung der ausfahrbaren Komponente (77) mittels zweier elektrisch beheizter flexibler Klebestreifen (81, 82) erreicht wird.

9. Rückhalte- und Freigabemechanismus nach einem der vorhergehenden Ansprüche, **dadurch gekennzeichnet, dass** die vertikalen Verschiebemittel des Hakens (7) einen Arm (14) umfassen.

## Revendications

1. Mécanisme de retenue et de libération pour une charge aéroportée extérieurement (13) munie d'un anneau de suspension (12), ledit mécanisme de retenue et de libération comprenant :
un corps (2) en forme de boîte présentant une ouverture inférieure (10), une paire de bras de support (8a, 8b) pour la charge (13) faisant saillie du corps (2) en forme de boîte sur des côtés opposés par rapport à ladite ouverture (10),
un crochet (7) accessible à travers ladite ouverture (10) et muni d'un pivot supérieur (16),
ledit crochet (7) étant conçu pour s'accoupler de manière libérable avec ledit anneau de suspension (12) de la charge (13) et étant rotatif autour dudit pivot (16) entre une position ouverte et une position de retenue dudit anneau de suspension (12) de la charge (13),
**caractérisé en ce que**
le mécanisme de retenue et de libération comprend des moyens de déplacement vertical conçus pour déplacer verticalement ledit crochet (7) de la position de retenue de la charge (13) à une position de blocage de la charge (13), relevée par rapport à la position de retenue, dans laquelle la charge (13) est pressée contre ladite paire de bras de support (8a, 8b).

2. Mécanisme de retenue et de libération selon la revendication 1, **caractérisé en ce qu'**il comprend un système d'assujettissement du crochet (7) dans ladite position de blocage de la charge (13),
ledit système d'assujettissement comprenant un actionneur (68) pourvu d'une tige de poussée (71), d'un ressort de rappel (73) et d'un élément extensible (77), ledit système d'assujettissement comprenant en outre un crochet d'assujettissement (41) relié audit crochet (7), et des moyens d'assujettissement (47) reliés audit corps en forme de boîte (2), lesdits moyens d'assujettissement (47) pouvant tourner sous l'action de ladite tige de poussée (71) actionnée par ledit élément extensible (77) entre une position de repos et une position d'assujettissement dans laquelle ledit crochet d'assujettissement (41) est assujetti.

3. Mécanisme de retenue et de libération selon l'une des revendications précédentes, **caractérisé en ce que** lesdits moyens de déplacement vertical dudit crochet (7) comprennent un système de levage (15), du type dit à vis et coin, qui comprend :
un coin (19),
une paire de blocs (20, 21),
une vis à double pas (22),
lesdits blocs (20, 21) présentant des surfaces inclinées respectives de glissement en contact avec des faces correspondantes du coin (19),
ledit coin (19) pouvant être déplacé verticalement à l'intérieur dudit appui (18) par rapprochement ou écartement mutuel de ladite paire de blocs (20, 21) déplacés par ladite vis à double pas (22).

4. Mécanisme de retenue et de libération selon la revendication 3, **caractérisé en ce que** ledit système de levage (15) comprend une butée mécanique (24) fixée dans un siège axial (90) de ladite vis (22), ladite butée (24) étant mobile entre une position de repos et une position de blocage de la rotation de ladite vis (22) par mise en prise d'au moins une bille (27) faisant partie intégrante de ladite butée (24) avec une pluralité de rainures (32) formées dans le siège (90) de ladite vis (22).

5. Mécanisme de retenue et de libération selon l'une des revendications précédentes, **caractérisé en ce que** chacun desdits bras de support (8a, 8b) comprend une coque (86) en alliage métallique, chaque coque (86) étant accouplée à une paire de bras saillants (85) en fibre de carbone.

6. Mécanisme de retenue et de libération selon l'une des revendications précédentes, **caractérisé en ce que** lesdits bras de support (8a, 8b) comprennent des surfaces de support (9) respectives dont la forme correspond à celle de ladite charge (13).

7. Mécanisme de retenue et de libération selon l'une des revendications précédentes, **caractérisé en ce que** les parois latérales de ladite ouverture (10) sont pourvues d'une forme telle qu'elles soient en contact avec les surfaces latérales dudit anneau de suspension (12) dans ladite position de blocage de la charge (13).

8. Mécanisme de retenue et de libération selon les revendications 2 à 7, **caractérisé en ce que** ledit élément extensible (77) est constitué d'un matériau comprenant un alliage métallique à mémoire de forme ayant une température d'activation supérieure à la température ambiante, c'est-à-dire la température normale d'utilisation dudit mécanisme d'assujettissement, ledit élément extensible (77) ayant une configuration comprimée à une température inférieure à la température d'activation et une configuration déployée à une température supérieure à la température d'activation ; ladite tige de poussée (71) dudit actionneur (68) desdits moyens d'assujettissement du crochet (7) étant actionnable pour faire tourner lesdits moyens d'assujettissement (47) dans ladite position d'assujettissement par la poussée obtenue par le chauffage commandé à une température supérieure à la température d'activation dudit élément extensible (77), le chauffage de l'élément extensible (77) étant obtenu au moyen de deux bandes adhésives flexibles chauffées électriquement (81, 82).

9. Mécanisme de retenue et de libération selon l'une des revendications précédentes, **caractérisé en ce que** lesdits moyens de déplacement vertical dudit crochet (7) comprennent un bras (14).
